(19) Europäisches Patentamt / European Patent Office / Office européen des brevets

(11) EP 1 970 410 B1

(12) **EUROPEAN PATENT SPECIFICATION**

(45) Date of publication and mention of the grant of the patent:
**14.11.2012 Bulletin 2012/46**

(21) Application number: **06843444.8**

(22) Date of filing: **27.12.2006**

(51) Int Cl.:
***C08L 69/00*** *(2006.01)*
***B29C 45/00*** *(2006.01)*
***C08K 5/527*** *(2006.01)*
***G02B 6/00*** *(2006.01)*
***G02F 1/13357*** *(2006.01)*
***B29K 69/00*** *(2006.01)*
***B29L 11/00*** *(2006.01)*

(86) International application number:
**PCT/JP2006/326062**

(87) International publication number:
**WO 2007/077874 (12.07.2007 Gazette 2007/28)**

(54) **AROMATIC POLYCARBONATE RESIN COMPOSITION FOR LIGHTGUIDE PLATE AND LIGHTGUIDE PLATE**

AROMATISCHES POLYCARBONATHARZ ENTHALTENDE ZUSAMMENSETZUNG FÜR LICHTLEITERPLATTE UND LICHTLEITERPLATTE

COMPOSITION DE RESINE DE POLYCARBONATE AROMATIQUE POUR UNE PLAQUE DE GUIDAGE DE LUMIERE AINSI QUE CETTE DERNIERE

(84) Designated Contracting States:
**DE**

(30) Priority: **06.01.2006 JP 2006001211**

(43) Date of publication of application:
**17.09.2008 Bulletin 2008/38**

(73) Proprietors:
- **MITSUBISHI ENGINEERING-PLASTICS CORPORATION**
  **Tokyo 105-0021 (JP)**
- **Mitsubishi Gas Chemical Company, Inc.**
  **Tokyo 100-8324 (JP)**
- **Mitsubishi Chemical Corporation**
  **Chiyoda-ku**
  **Tokyo 100-8251 (JP)**

(72) Inventors:
- **KUROKAWA, Haruhiko**
  **Kanagawa 254-0016 (JP)**
- **ISHII, Kazuhiko**
  **Kanagawa 254-0016 (JP)**
- **TAHARA, Hisashi**
  **Kanagawa 254-0016 (JP)**
- **ANDO, Kazuhiro**
  **Ibaraki 314-0102 (JP)**
- **ABE, Hisato**
  **Ibaraki 314-0102 (JP)**
- **TAKAHASHI, Kazuyuki**
  **Fukuoka 806-004 (JP)**
- **UCHIMURA, Ryuuji**
  **Fukoka 806-004 (JP)**

(74) Representative: **HOFFMANN EITLE**
**Patent- und Rechtsanwälte**
**Arabellastrasse 4**
**81925 München (DE)**

(56) References cited:
**EP-A1- 0 890 944**
**EP-A1- 1 251 371**
**EP-A1- 1 512 723**
**JP-A- 2003 090 901**
**JP-A- 2003 162 841**
**JP-A- 2004 109 162**
**JP-A- 2005 290 320**
**JP-A- 2005 336 332**
**US-A1- 2003 023 024**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 970 410 B1

## Description

### TECHNICAL FIELD

The present invention relates to a thin light guide plate obtained by molding an aromatic polycarbonate resin composition. For light guide plates which is excellent in mechanical strength, transfer property, light transmittance, thermal stability and moldability.

### BACKGROUND ART

Liquid crystal displays for use in personal computers, portable telephones, PDA (Personal Digital Assistant), etc., include a built-in surface light source device in order to meet the requirements such as reduction in thickness and weight, power saving and high sophistication. The surface light source device include is equipped with a light guide plate having a wedge-shaped cross section whose one surface is uniformly inclined, or a light guide plate of a flat plate shape, for the purpose of uniformly and effectively introducing a light entering thereinto to the side of the liquid crystal display.

Conventional light guide plates have been molded from resin materials such as polymethyl methacrylate (PMMA). However, in recent years, there is a demand for display devices capable of displaying much clearer images, and there is such a tendency that an inside of the devices is exposed to a high temperature owing to heat generated in the vicinity of a light source. Therefore, the conventional resin materials tend to be replaced with aromatic polycarbonate resin materials having a higher heat resistance.

In addition, with reduction in thickness and increase in size of display devices including those for televisions or personal computers, there is such an increasing tendency that the light guide plate or surrounding equipments are also reduced in thickness and increased in size. For example, liquid crystal displays currently used in portable telephones, etc., have a thickness of about 3 mm. The light guide plate incorporated into such thin liquid crystal displays has a thickness of about 0.7 mm in minimum. However, with the recent tendency that the thickness of the liquid crystal displays is further reduced, there is a demand for providing light guide plates having a thickness smaller than 0.7 mm.

In order to produce the light guide plate having a small thickness and a large size, it is required that the resin materials are molded at a temperature higher than molding temperatures used conventionally. Therefore, it has been demanded to provide resin materials that are not only excellent in fluidity and transfer property and free from discoloration or mold deposits, but also excellent in thermal stability upon melting and releasability.

As the resin materials having excellent fluidity and mechanical strength, there are known aromatic polycarbonate resins having a tert-octylphenoxy group at a terminal end thereof (Patent Document 1). In addition, there have been proposed aromatic polycarbonate resins having a long-chain alkylphenoxy group at a terminal end thereof (Patent Document 2), and polycarbonate resin compositions composed of an aliphatic segment-containing copolyester carbonate and an aromatic polycarbonate (Patent Document 3).

However, the light guide plates proposed in these patent documents have a thickness as large as about 3 mm. Although it was attempted to produce a light guide plate having a thickness smaller than 0.7 mm by an injection molding method according to the techniques proposed in the patent documents, the resin materials used therein failed to ensure a good fluidity enough to obtain such a light guide plate having a desired small thickness, so that a cavity of a mold could not be completely filled with the molten thermoplastic resins. Further, in any of the above proposed techniques, the resin materials tend to be deteriorated in thermal stability upon melting or releasability, resulting in merely production of light guide plates having a poor practical value.

Patent Document 1: Japanese Patent Application Laid-Open (KOKAI) No. 2001-208917
Patent Document 2: Japanese Patent Application Laid-Open (KOKAI) No. 2001-208918
Patent Document 3: Japanese Patent Application Laid-Open (KOKAI) No. 2001-215336

EP 1 512 723 is directed to aromatic polycarbonate resin compositions for a light guide plate having excellent mechanical and thermal properties, and light transmittance. The document indicates that the aromatic polycarbonate resins should have a viscosity-average molecular weight (Mv) ranging from 10,000 to 30,000. However, the ratio of the weight-average molecular weight to the number-average molecular weight (Mw/Mn) of the polycarbonates is not mentioned, and the light guide plates with an average thickness of 3 mm moulded from the disclosed polycarbonate compositions have an average luminance considerably less than 4,400 cd/$m^2$.

DISCLOSURE OF THE INVENTION

PROBLEM TO BE SOLVED BY THE INVENTION

The present invention has been made in view of the above conventional problems. An object of the present invention is to provide a light guide plate as a molded product having a thin thickness and a large size, obtained from an aromatic polycarbonate resin composition which is excellent in mechanical strength, transfer property, light transmittance, thermal stability and moldability.

MEANS FOR SOLVING THE PROBLEM

As a result of the present inventors' earnest study, it has been found that the above object can be achieved by using an aromatic polycarbonate resin having a specific molecular weight and a specific molecular weight distribution. The present invention has bee attained on the basis of the above finding.

That is, there is provided a light guide plate produced by molding an aromatic polycarbonate resin composition for light guide plates, comprising:

an aromatic polycarbonate resin having a viscosity-average molecular weight of 13,000 to 15,000, and a ratio of a weight-average molecular weight to a number-average molecular weight (Mw/Mn) of 1.5 to 2.7 in terms of polystyrene as measured by gel permeation chromatography; and
a stabilizer and a releasing agent blended in the aromatic polycarbonate resin,
wherein the viscosity-average molecular weight is calculated according to the formula

$$[\eta] = 1.23 \times 10^{-4} \times (M_v)^{0.83}$$

and the intrinsic viscosity [η] is measured at 20°C in methylene chloride using an Ubbelohde viscometer, and wherein the light guide plate has an average luminance of not less than 4,400 cd/$m^2$ when molded at an average thickness of 0.3mm.

EFFECT OF THE INVENTION

The resin composition used in the present invention is excellent in fluidity as compared to conventional resin compositions for light guide plates, and are therefore capable of being molded into a thin light guide plate having a thickness of not more than 0.7 mm, in particular, not more than 0.44 mm in its region occupying at least 80% of the light guide plate. In addition, the resin composition used in the present invention is capable of retaining good properties as required for light guide plates (such as mechanical strength, transfer property, light transmittance and thermal stability) even when formed into a molded product having a desired small thickness and, therefore, usable as a material of light guide plates for thin and large-size liquid crystal displays.

BRIEF DESCRIPTION OF THE DRAWINGS

Fig. 1 is a conceptual view of a surface light source device of a back-light type;
Fig. 2 is a conceptual view of a surface light source device of a front-light type; and
Fig. 3 is a conceptual view of a light guide plate for measuring a luminance as used in Examples.

Explanation of Reference Numerals

1: Light guide plate; 2: Light source; 3: Liquid crystal display device; 4: Reflecting member; 5: Diffusion sheet; 6: Phase difference film (or polarizing film)

PREFERRED EMBODIMENTS FOR CARRYING OUT THE INVENTION

The present invention is described in detail below. The aromatic polycarbonate resin used in the present invention includes branched or unbranched thermoplastic polycarbonate polymers or copolymers which are produced

by reacting an aromatic hydroxy compound or a mixture of the aromatic hydroxy compound and a small amount of a polyhydroxy compound with phosgene or a carbonic diester.

The aromatic polycarbonate resin may be produced by conventionally known methods such as, for example, a phosgene method (interfacial polymerization method) and a melting method (transesterification method). Further, according to the melting method, there may be produced such an aromatic polycarbonate resin in which the amount of OH end groups is well controlled.

Examples of the aromatic dihydroxy compound used as the raw material of the aromatic polycarbonate resin may include bis(hydroxyaryl)alkanes such as 2,2-bis(4-hydroxyphenyl)propane (alias: bisphenol A), 2,2-bis(3,5-bibromo-4-hydroxyphenyl)propane (alias: tetrabromobisphenol A), bis(4-hydroxyphenyl)methane, 1,1-bis(4-hydroxyphenyl) ethane, 2,2-bis(4-hydroxyphenyl)butane, 2,2-bis(4-hydroxyphenyl)octane, 2,2-bis(4-hydroxy-3-methylphenyl)propane, 1,1-bis(3-tert-butyl-4-hydroxyphenyl)propane, 2,2-bis(4-hydroxy-3,5-dimethylphenyl)propane, 2,2-bis(3-bromo-4-hydroxyphenyl)propane, 2,2-bis(3,5-dichloro-4-hydroxyphenyl)propane, 2,2-bis(3-phenyl-4-hydroxyphenyl)propane, 2,2-bis(3-cyclohexyl-4-hydroxyphenyl)propane, 1,1-bis(4-hydroxyphenyl)-1-phenylethane, bis(4-hydroxyphenyl)diphenylmethane, 2,2-bis (4-hydroxyphenyl)-1,1,1-trichloropropane, 2,2-bis(4-hydroxyphenyl)-1,1,1,3,3,3-hexachloropropane and 2,2-bis(4-hydroxyphenyl)-1,1,1,3,3,3-hexafluoropropane; bis(hydroxyaryl)cycloalkanes such as 1,1-bis(4-hydroxyphenyl)cyclopentane, 1,1-bis(4-hydroxyphenyl)cyclohexane and 1,1-bis(4-hydroxyphenyl)-3,3,5-trimethylcyclohexane; bisphenols having a cardo structure such as 9,9-bis(4-hydroxyphenyl)fluorene and 9,9-bis(4-hydroxy-3-methylphenyl) fluorene; dihydroxydiaryl ethers such as 4,4'-dihydroxydiphenyl ether and 4,4'-dihydroxy-3,3'-dimethyldiphenyl ether; dihydroxydiaryl sulfides such as 4,4'-dihydroxydiphenyl sulfide and 4,4'-dihydroxy-3,3'-dimethyldiphenyl sulfide; dihydroxydiaryl sulfoxides such as 4,4'-dihydroxydiphenyl sulfoxide and 4,4'-dihydroxy-3,3'-dimethyldiphenyl sulfoxide; dihydroxydiaryl sulfones such as 4,4'-dihydroxydiphenyl sulfone and 4,4'-dihydroxy-3,3'-dimethyldiphenyl sulfone; hydroquinone; resorcin; and 4,4'-dihydroxydiphenyl. Among these aromatic dihydroxy compounds, preferred are bis(4-hydroxyphenyl)alkanes, and more preferred is bisphenol A from the viewpoint of a good impact resistance of the resultant resin. In addition, for the purpose of enhancing a flame retardancy of the resultant resin, there may also be used those compounds obtained by bonding one or more sulfonic acid tetraalkyl phosphonium groups to the above aromatic dihydroxy compounds. These aromatic dihydroxy compounds may be used in combination of any two or more thereof.

The branched aromatic polycarbonate resin may be obtained by such an interfacial polymerization method in which a part of the above aromatic dihydroxy compound is replaced with a polyhydroxy compound such as fluoroglucin, 4,6-dimethyl-2,4,6-tris(4-hydroxyphenyl)heptene-2, 4,6-dimethyl-2,4,6-tris(4-hydroxyphenyl)heptane, 2,6-dimethyl-2,4,6-tris(4-hydroxyphenyl)heptene-3, 1,3,5-tris(4-hydroxyphenyl)benzene and 1,1,1-tris(4-hydroxyphenyl)ethane, or 3,3-bis(4-hydroxyaryl)oxyindole (alias: isatin bisphenol), 5-chloroisatin, 5,7-dichloroisatin, 5-bromoisatin, etc. The amount of the polyhydroxy compound or the like which is used for replacing a part of the aromatic dihydroxy compound is usually 0.01 to 10 mol% and preferably 0.1 to 2 mol% on the basis of the aromatic dihydroxy compound. On the other hand, in the melting method, the branched aromatic polycarbonate resin may be obtained by optionally adding the above branching agent and well controlling the reaction temperature and the amount of the catalyst used.

The reaction by the interfacial polymerization method may be conducted in the following manner by using the aromatic dihydroxy compound, optionally together with a molecular weight controller (end stopping agent) and an antioxidant for preventing oxidation of the aromatic dihydroxy compound. That is, the aromatic dihydroxy compound is reacted with phosgene in the presence of an organic solvent inert to the reaction and an alkali aqueous solution while maintaining the reaction system at a pH of usually not less than 9, and then a polymerization catalyst such as a tertiary amine and a quaternary ammonium salt is added to the reaction system to conduct the interfacial polymerization, thereby obtaining a polycarbonate. Meanwhile, the reaction temperature is, for example, 0 to 40°C, and the reaction time is, for example, from several minutes (for example, 10 min) to several hours (for example, 6 hours).

Examples of the organic solvent inert to the reaction may include chlorinated hydrocarbons such as dichloromethane, 1,2-dichloroethane, chloroform, monochlorobenzene and dichlorobenzene; and aromatic hydrocarbons such as benzene, toluene and xylene. Examples of the alkali compound used in the alkali aqueous solution may include hydroxides of alkali metals such as sodium hydroxide and potassium hydroxide.

Examples of the molecular weight controller may include compounds containing a monovalent phenolic hydroxyl group. Specific examples of the molecular weight controller may include m-methyl phenol, p-methyl phenol, m-propyl phenol, p-propyl phenol, p-tert-butyl phenol and p-long chain alkylsubstituted phenols. The amount of the molecular weight controller used is usually 50 to 0.5 mol and preferably 30 to 1 mol on the basis of 100 mol of the aromatic dihydroxy compound.

The melting transesterification method may be conducted, for example, by subjecting the carbonic diester and the aromatic dihydroxy compound to transesterification reaction.

Examples of the carbonic diester may include compounds represented by the following general formula (1):

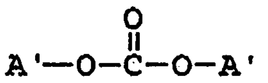

(1)

In the general formula (1), A' is a substituted or unsubstituted, linear, branched or cyclic monovalent hydrocarbon group having 1 to 10 carbon atoms. The two A' groups may be the same or different. Meanwhile, examples of the substituent group bonded to the A' group may include a halogen atom, an alkyl group having 1 to 10 carbon atoms, an alkoxy group having 1 to 10 carbon atoms, a phenyl group, a phenoxy group, a vinyl group, a cyano group, an ester group, an amide group and a nitro group.

Specific examples of the carbonic diester may include diphenyl carbonate, substituted diphenyl carbonates such as ditolyl carbonate, and dialkyl carbonates such as dimethyl carbonate, diethyl carbonate and di-tert-butyl carbonate. Among these carbonic diesters, preferred are diphenyl carbonate (hereinafter referred to merely as "DPC") and substituted diphenyl carbonates. These carbonic diesters may be used in combination of any two or more thereof.

In addition, a part of the above carbonic diester may be replaced with a dicarboxylic acid or a dicarboxylic ester. The percentage of a part of the carbonic diester which may be replaced with a dicarboxylic acid or a dicarboxylic ester is usually not more than 50 mol% and preferably not more than 30 mol%. Typical examples of the dicarboxylic acid or the dicarboxylic ester may include terephthalic acid, isophthalic acid, diphenyl terephthalate and diphenyl isophthalate. When a part of the carbonic diester is replaced with these compounds, the obtained transesterification reaction products are polyester carbonates.

Also, upon producing the polycarbonates by a transesterification method, the carbonic diester (including the dicarboxylic acid or the dicarboxylic ester used for replacing a part of the carbonic diester; this is similarly applied to the subsequent descriptions) is used in an excessive amount relative to the aromatic dihydroxy compound. That is, the ratio (molar ratio) of the carbonic diester to the aromatic dihydroxy compound is usually 1.01 to 1.30, preferably 1.05 to 1.20 and more preferably 1.10 to 1.20. When the molar ratio is too small, the content of end OH groups in the resultant aromatic polycarbonates tends to be increased, resulting in deteriorated thermal stability of the resins. Whereas, when the molar ratio is too large, the transesterification reaction rate tends to be lowered, so that it tends to be difficult to produce aromatic polycarbonates having a desired molecular weight. Further, since the amount of the residual carbonic diester in the obtained resins is increased, off-odor tends to be generated upon molding or from the resultant molded product. Therefore, the content of the end hydroxyl groups in the obtained aromatic polycarbonates is preferably not less than 100 ppm. By controlling the content of the end hydroxyl groups to the above specified range, it is possible to prevent reduction in molecular weight of the obtained aromatic polycarbonates and allowing the aromatic polycarbonates to exhibit a more excellent color tone.

In general, the polycarbonates having a desired molecular weight and containing a desired amount of the end hydroxy groups may be obtained by controlling a mixing ratio between the carbonic diester and the aromatic dihydroxy compound or adjusting a degree of vacuum used upon the reaction. As the more positive method, there may be used such a known control method in which an end stopping agent is separately added upon the reaction. Examples of the end stopping agent used in the above method may include monovalent phenols, monovalent carboxylic acids and carbonic diesters. The content of the end hydroxyl groups in the polycarbonates has a large influence on thermal stability, hydrolysis stability, color tone, etc., of the polycarbonate products. The content of the end hydroxyl groups in the polycarbonates varies depending upon applications thereof, and is usually not more than 1,000 ppm and preferably not more than 700 ppm in order to allow the polycarbonates to exhibit practical properties.

When producing the polycarbonates by a transesterification method, the transesterification is usually conducted in the presence of a transesterification catalyst. The transesterification catalyst used in the above method is not particularly limited, and is preferably an alkali metal compound and/or an alkali earth metal compound. The transesterification catalyst may be used in combination with a basic compound as an auxiliary component such as a basic boron compound, a basic phosphorus compound, a basic ammonium compound and an amine-based compound. Among these transesterification catalysts, from the practical viewpoint, preferred are alkali metal compounds. These transesterification catalysts may be used in combination of any two or more thereof. The amount of the transesterification catalyst used is in the range of usually $1 \times 10^{-9}$ to $1 \times 10^{-1}$ mol, preferably $1 \times 10^{-7}$ to $1 \times 10^{-3}$ mol and more preferably $1 \times 10^{-7}$ to $1 \times 10^{-6}$ mol on the basis of 1 mol of the aromatic dihydroxy compound.

**[0031]** , Examples of the alkali metal compounds may include inorganic alkali metal compounds such as hydroxides, carbonates and hydrogencarbonate compounds of alkali metals; organic alkali metal compounds such as salts of alkali metals with alcohols (or phenols) or organic carboxylic acids. Examples of the alkali metal used in the alkali metal compounds may include lithium, sodium, potassium, rubidium and cesium. Among these alkali metal compounds, preferred are cesium compounds, and more preferred are cesium carbonate, cesium hydrogencarbonate and cesium hydroxide.

The transesterification reaction between the aromatic dihydroxy compound and the carbonic diester may be conducted in the following manner.

First, in the raw material preparation step, a mixed melt solution of the raw materials is prepared in an inert gas atmosphere such as nitrogen and argon using a batch-type, semi-batch-type or continuous-type stirring vessel apparatus. For example, when using bisphenol A as the aromatic dihydroxy compound and diphenyl carbonate as the carbonic diester, the temperature used upon the melting and mixing is in the range of usually 120 to 180°C and preferably 125 to 160°C.

Next, in the polycondensation step, the aromatic dihydroxy compound and the carbonic diester compound are subjected to transesterification reaction. The transesterification reaction is continuously conducted in a multi-stage manner, usually in two or more stages and preferably in 3 to 7 stages. Specific reaction conditions in the respective stage vessels include temperature: 150 to 320°C; pressure: from normal pressures to reduced pressure (0.01 Torr: 1.3 Pa); and average residence time: 5 to 150 min.

In the respective reactors used in the multi-stage operation, in order to effectively remove phenols by-produced with the proceeding of the polycondensation reaction out of the reaction system, the temperature and the degree of vacuum is stepwise increased within the ranges of the above specified reaction conditions, and finally the pressure is reduced to not more than 2 Torr (266.6 Pa), whereby the melt polycondensation reaction can be conducted while removing the by-products such as aromatic hydroxy compounds from the reaction system. Meanwhile, in order to prevent the obtained aromatic polycarbonates from being deteriorated in quality such as hue, the reaction temperature and the residence time are preferably kept as low as possible and as short as possible, respectively, within the ranges of the above specified reaction conditions.

The melt-polycondensation may be conducted by either a batch method or a continuous method, and is preferably conducted by a continuous method from the viewpoints of a good stability of the resin composition of the present invention. Examples of a deactivator for the catalyst contained in the polycarbonates produced by the transesterification method may include compounds capable of neutralizing the transesterification catalyst, for example, sulfur-containing acid compounds or derivatives formed therefrom. The compound capable of neutralizing the transesterification catalyst may be used in an amount of usually 0.5 to 10 equivalents and preferably 1 to 5 equivalents on the basis of the alkali metal contained in the catalyst. Further, the compound capable of neutralizing the transesterification catalyst may be used in an amount of usually 1 to 100 ppm and preferably 1 to 20 ppm on the basis of the polycarbonates.

In addition, the aromatic polycarbonate resin used in the present invention may be copolymerized with a polymer or an oligomer having a siloxane structure for the purpose of imparting a good flame retardancy thereto. These aromatic polycarbonate resins may be used in the form of a mixture of any two or more thereof.

The aromatic polycarbonate resin having a specific molecular weight (viscosity-average molecular weight: 13,000 to 15,000) used in the present invention may be produced, for example, by suitably selecting the amount of the molecular weight controller used. More specifically, the molecular weight controller may be used in a larger amount than that used for obtaining the aromatic polycarbonate resin having a larger molecular weight than the above-mentioned molecular weight.

The molecular weight of the aromatic polycarbonate resin used in the present invention is 13,000 to 15,000 when determined from its viscosity-average molecular weight in terms of a solution viscosity as measured at 25°C using methylene chloride as a solvent. When the viscosity-average molecular weight of the aromatic polycarbonate resin is less than 13,000, the aromatic polycarbonate resin tends to be deteriorated in mechanical strength, whereas when the viscosity-average molecular weight of the aromatic polycarbonate resin is more than 15,000, the melt viscosity thereof tends to be too high, so that it may be difficult to obtain a thin and large-size light guide plate by molding the resultant resin composition.

The ratio of a weight-average molecular weight to a number-average molecular weight (Mw/Mn) of the aromatic polycarbonate resin used in the present invention which are measured by gel permeation chromatography (GPC) and expressed in terms of polystyrene, is 1.5 to 2.7 and preferably 1.8 to 2.6. When the ratio (molecular weight distribution) is less than 1.5, the resultant resin tends to be insufficient in fluidity and transfer property. When the ratio (molecular weight distribution) is more than 2.7, mold deposits tend to be caused upon molding. Meanwhile, the GPC measurement may be conducted by using two columns "Shodex K-805L" manufactured by Showa Denko Co., Ltd., and using chloroform as a solvent.

Also, in the aromatic polycarbonate resin used in the present invention, the content of low-molecular weight aromatic polycarbonate polymer (low-molecular weight polymer) therein is preferably not more than 2% by weight. When satisfying such a requirement, the resultant resin can be prevented from suffering from problems such as mold deposits and deteriorated appearance (burning). Meanwhile, the molecular weight of the low-molecular weight aromatic polycarbonate means a weight-average-molecular weight as measured by GPC and expressed in terms of polycarbonate, and may be measured by the same method as described above.

The aromatic polycarbonate resin having the above specified molecular weight distribution and low-molecular weight polymer content may be produced, for example, by the following method. That is, in the production process using an interfacial polymerization method, the aromatic polycarbonate resin may be produced by using the molecular weight controller in a specific amount range, changing the time of addition of the molecular weight controller, or controlling the

reaction conditions (such as reaction time and reaction temperature). More specifically, the above aromatic polycarbonate resin may be produced by controlling an amount of the molecular weight controller used to 7.0 to 8.5 mol (per 100 mol of the aromatic dihydroxy compound), adding the molecular weight controller after the reaction with phosgene or adding respective divided parts of the molecular weight controller separately before and after the reaction with phosgene, controlling the reaction time within 2 hr, or controlling the reaction temperature to not higher than 30°C. Meanwhile, in addition to the above methods, as the method for reducing the content of the low-molecular weight polymer in the aromatic polycarbonate resin, there may be employed a non-solvent precipitation method or a non-solvent extraction method in which the polycarbonate is precipitated or extracted using acetone, etc.

Also, in the melt transesterification method, the balance of a molar ratio between the carbonic diester and the aromatic dihydroxy compound is well controlled, and the amount of the catalyst used is lowered, thereby minimizing branched species formed during the melt polymerization. As a result, the aromatic polycarbonate resin having the specific molecular weight distribution and low-molecular weight polymer content can be obtained. More specifically, there may be used such a method in which the ratio (molar ratio) of the carbonic diester to the aromatic dihydroxy compound used is controlled to the range of 1.10 to 1.20, and the amount of the transesterification catalyst used is controlled to the range of $1 \times 10^{-7}$ to $1 \times 10^{-6}$ per 1 mol of the aromatic dihydroxy compound.

The aromatic polycarbonate resin composition used in the present invention contains a stabilizer in order to improve a light transmittance and a hue thereof. Examples of the stabilizer may include phosphorus-based or hindered phenol-based antioxidants such as phosphorous acid esters and phosphoric acid esters. Among these stabilizers, preferred are phosphorous acid ester-based stabilizers.

The preferred stabilizers used in the present invention are phosphorous acid esters represented by the following general formula (I):

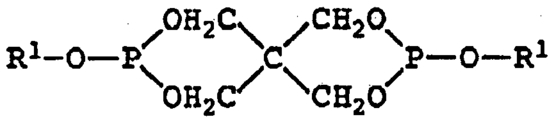

(I)

wherein $R^1$ is an aryl group or an alkyl group and the two $R^1$ groups may be the same or different.

When $R^1$ in the general formula (I) is an aryl group, $R^1$ is preferably an aryl group represented by any of the following general formulae (a) and (b), and the following formula (c).

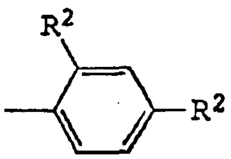

(a)

wherein $R^2$ is an alkyl group having 1 to 10 carbon atoms.

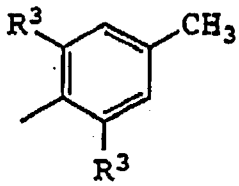

(b)

wherein $R^3$ is an alkyl group having 1 to 10 carbon atoms.

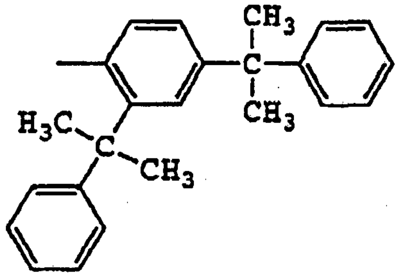

(c)

Examples of the phosphorous ester of the general formula (I) in which $R^1$ is the aryl group represented by the general formula (a) may include bis(2,4-di-tert-butylphenyl)pentaerythritol diphosphite which is commercially available under the tradename "ADEKASTAB PEP-24G" from Asahi Denka Kogyo Co., Ltd. Examples of the phosphorous ester of the general formula (I) in which $R^1$ is the aryl group represented by the general formula (b) may include bis(2,6-di-tert-butylphenyl)pentaerythritol diphosphite in which $R^3$ in the general formula (b) is a tert-butyl group. The compound is commercially available under the tradename "ADEKASTAB PEP-36" from Asahi Denka Kogyo Co., Ltd. Examples of the phosphorous ester of the general formula (I) in which $R^1$ is the aryl group represented by the formula (c) may include bis(2,4-dicumylphenyl)pentaerythritol diphosphite which is commercially available under the tradename "DOVAPHOS S-9228" from Dovar Chemical Co., Ltd.

The alkyl group as $R^1$ in the general formula (I) is preferably an alkyl group having 1 to 30 carbon atoms. Specific examples of the phosphorous acid ester of the general formula (I) in which $R^1$ is an alkyl group having 1 to 30 carbon atoms may include distearyl pentaerythritol diphosphite and dinonyl pentaerythritol diphosphite. Among these phosphorous acid esters, preferred is distearyl pentaerythritol diphosphite.

Examples of the other preferred stabilizers used in the present invention may include phosphorous acid esters represented by the following general formula (II). The phosphorous acid esters of the general formula (II) are preferably used, in particular, as a stabilizer for aromatic polycarbonate resins produced by a transesterification method.

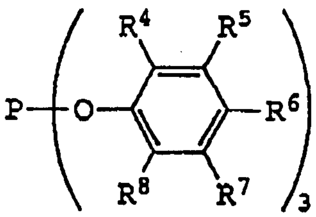

(II)

wherein $R^4$ to $R^8$ are respectively a hydrogen atom, an aryl group or an alkyl group having 1 to 20 carbon atoms, and may be the same or different.

Examples of the aryl group or alkyl group as $R^4$ to $R^8$ in the above general formula (II) may include phenyl, methyl, ethyl, propyl, n-propyl, n-butyl and tert-butyl. Among the phosphorous acid esters represented by the general formula (II), especially preferred is tris(2,4-di-tert-butylphenyl)phosphite in which $R^4$ and $R^6$ are each a tert-butyl group, and $R^5$, $R^7$ and $R^8$ are each a hydrogen atom. This compound is commercially available under the tradename "ADEKASTAB 2112" from Asahi Denka Kogyo Co., Ltd.

Examples of the phosphoric acid ester-based stabilizer may include compounds represented by the following general formula (2):

$O{=}P(OH)_n(OR^9)_{3-n}$ (2)

wherein $R^9$ is an alkyl group or an aryl group and the plural $R^9$ groups, if any, may be the same or different; and n is an integer of 0 to 2.

In the general formula (2), $R^9$ is preferably an alkyl group having 1 to 30 carbon atoms or an aryl group having 6 to 30 carbon atoms, and more preferably an alkyl group having 2 to 25 carbon atoms, a phenyl group, a nonylphenyl group, a stearylphenyl group, a 2,4-di-tert-butylphenyl group, a 2,4-di-tert-butyl-methylphenyl group or a tolyl group.

Examples of the hindered phenol-based stabilizer may include pentaerythritol tetrakis[3-(3,5-di-tert-butyl-4-hydroxyphenyl)propionate], octadecyl-3-(3,5-di-tert-butyl-4-hydroxyphenyl)propionate, thiodiethylenebis[3-(3,5-di-tert-butyl-4-hydroxyphenyl)propionate] and pentaerythritol tetrakis[3-(3,5-di-neopentyl-4-hydroxyphenyl)propionate]. Among these hindered phenol-based stabilizers, preferred are tetrakis[3-(3,5-di-tert-butyl-4-hydroxyphenyl)propionate] and octadecyl-3-(3,5-di-tert-butyl-4-hydroxyphenyl)propionate. The above two phenol-based antioxidants are commercially available under tradenames "IRGANOX 1010" and "IRGANOX 1076", respectively, from Ciba Specialty Chemicals, Corp.

The amount of the stabilizer blended in the resin composition is usually 0.001 to 2.0 parts by weight and preferably 0.003 to 1.0 part by weight on the basis of 100 parts by weight of the aromatic polycarbonate resin. When the amount of the stabilizer blended is less than 0.001 part by weight, the effect of improving a hue or a light transmittance of the resin composition tends to be insufficient. On the contrary, when the amount of the stabilizer blended is more than 2.0 parts by weight, mold deposits tend to be caused, and the production costs tend to be disadvantageously increased. The above stabilizers may be used in combination of any two or more thereof.

The aromatic polycarbonate resin composition of the present invention containsa releasing agent for the purpose of improving a releasability of the resin composition upon molding. The releasing agent is preferably at least one compound selected from the group consisting of aliphatic carboxylic acids, aliphatic carboxylic acid esters, aliphatic hydrocarbons having a number-average molecular weight of 200 to 15000, and polysiloxane-based silicone oils.

Examples of the aliphatic carboxylic acids may include saturated or unsaturated aliphatic mono-, di- or tricarboxylic acids. The aliphatic carboxylic acids may also include alicyclic carboxylic acids. The aliphatic carboxylic acids are preferably mono- or di-carboxylic acids having 6 to 36 carbon atoms and more preferably aliphatic saturated monocarboxylic acids having 6 to 36 carbon atoms. Specific examples of the aliphatic carboxylic acids may include palmitic acid, stearic acid, valeric acid, caproic acid, capric acid, lauric acid, arachidic acid, behenic acid, lignoceric acid, cerotic acid, melissic acid, tetratriacontanoic acid, montanoic acid, glutaric acid, adipic acid and azelaic acid.

As an aliphatic carboxylic acid component capable of forming the aliphatic carboxylic acid esters, there may be used the same aliphatic carboxylic acids as described above. On the other hand, examples of an alcohol component capable of forming the esters by reacting with the aliphatic carboxylic acid component may include saturated or unsaturated monohydric alcohols and saturated or unsaturated polyhydric alcohols. These alcohols may contain a substituent group such as a fluorine atom and an aryl group. In particular, among these alcohols, preferred are monohydric or polyhydric saturated alcohols having not more than 30 carbon atoms, and more preferred are aliphatic saturated monohydric alcohols or polyhydric alcohols having not more than 30 carbon atoms. The aliphatic alcohols may also include alicyclic alcohols.

Specific examples of the alcohols may include octanol, decanol, dodecanol, tetradecanol, stearyl alcohol, behenyl alcohol, ethylene glycol, diethylene glycol, glycerol, pentaerythritol, 2,2-dihydroxyperfluoropropanol, neopentyl glycol, ditrimethylol propane and dipentaerythritol.

The above aliphatic carboxylic acid esters may contain aliphatic carboxylic acids or alcohols as impurities, and may be in the form of a mixture containing a plurality of compounds.

Specific examples of the aliphatic carboxylic acid esters may include beeswax (mixture containing myricyl palmitate as a main component), stearyl stearate, behenyl behenate, octyldodecyl behenate, glycerol monopalmitate, glycerol monostearate, glycerol distearate, glycerol tristearate, pentaerythritol monopalmitate, pentaerythritol monostearate, pentaerythritol distearate, pentaerythritol tristearate and pentaerythritol tetrastearate.

Examples of the aliphatic hydrocarbons having a number-average molecular weight of 200 to 15000 may include liquid paraffins, paraffin waxes, micro waxes, polyethylene waxes, Fischer-Tropsch waxes and $\alpha$-olefin oligomers having 3 to 12 carbon atoms. The aliphatic hydrocarbons used therein may also include alicyclic hydrocarbons. In addition, these aliphatic hydrocarbons may be partially oxidized.

The kinematic viscosity of the polysiloxane-based silicone oils is usually 1 to 200 cSt, preferably 5 to 100 cSt and more preferably 10 to 50 cSt. The polysiloxane-based silicone oils are preferably those compounds containing a phenyl group bonded to at least a side chain thereof and having a branched siloxane structure, and may be in the form of either a single compound or a mixture of compounds. In the polysiloxane-based silicone oils in the form of the mixture, a polyorganosiloxane containing a phenyl group bonded to at least a side chain thereof is preferably used in combination with a polyorganosiloxane having at least a branched siloxane structure. The polysiloxane-based silicone oils may be readily obtained by ordinary organic reactions.

The effects attained by adding the polysiloxane-based silicone oils include not only the effect of improving a releasability of the resin composition upon molding but also the effect of further enhancing a transparency, a luminance and a hue of the resultant light guide plate. These effects become more remarkable when using the polysiloxane-based silicone oils having a kinematic viscosity of not more than 200 cSt.

The releasing agent used in the present invention is preferably at least one compound selected from the group consisting of the above aliphatic carboxylic acids, aliphatic carboxylic acid esters, aliphatic hydrocarbon compounds and polysiloxane-based silicone oils. Among these releasing agents, from the viewpoints of good releasability, transparency, luminance and hue, preferred are the polysiloxane-based silicone oils.

The amount of the releasing agent blended in the resin composition is usually not more than 2 parts by weight and preferably not more than 1 part by weight on the basis of 100 parts by weight of the aromatic polycarbonate resin. When the amount of the releasing agent blended is more than 2 parts by weight, the resultant resin composition tends to be deteriorated in hydrolysis resistance and suffer from problems such as contamination of a mold upon injection-molding.

In the present invention, the resin composition may also contain various additives for resins other than the

above stabilizer and releasing agent. Examples of the additives may include ultraviolet absorbers, fluorescent brighteners, dyes or pigments, flame retardants, impact modifiers, antistatic agents, lubricants, plasticizers, compalibilizers, antibacterial agents and fillers.

Examples of the ultraviolet absorbers may include benzophenone-based compounds, benzotriazole-based compounds, phenyl salicylate-based compounds and hindered amine-based compounds.

Specific examples of the benzophenone-based ultraviolet absorbers may include 2,4-dihydroxy-benzophenone, 2-hydroxy-4-methoxy-benzophenone, 2-hydroxy-4-n-octoxy-benzophenone, 2-hydroxy-4-dodecyloxy-benzophenone, 2-hydroxy-4-octadecyloxy-benzophenone, 2,2'-dihydroxy-4-methoxybenzophenone, 2,2'-dihydroxy-4,4'-dimethoxybenzophenone and 2,2',4,4'-tetrahydroxy-benzophenone.

Specific examples of the benzotriazole-based ultraviolet absorbers may include 2-(2'-hydroxy-5-methylphenyl) benzotriazole, 2-(2'-hydroxy-3',5'-di-tert-butylphenyl)benzotriazole and 2-(2'-hydroxy-3'-tert-butyl-5'-methylphenyl)benzotriazole.

Specific examples of the phenyl salicylate-based ultraviolet absorbers may include phenyl salicylate and 2,4-di-tert-butylphenyl-3,5-di-tert-butyl-4-hydroxybenzoate.

Specific examples of the hindered amine-based ultraviolet absorbers may include bis(2,2,6,6-tetramethyl piperidine-4-yl)sebacate.

The ultraviolet absorbers used in the present invention may also include, in addition to the above-illustrated compounds, those compounds having a function of converting an energy of ultraviolet light into a vibration energy in a molecule thereof and radiating the vibration energy in the form of a thermal energy, etc. In the present invention, the ultraviolet absorbers may also be used in combination with additives capable of exhibiting a synergistic effect by combining with antioxidants or colorants, or light stabilizers called a "quencher" which may act as a light energy converter.

The amount of the ultraviolet absorber blended in the resin composition is usually 0.01 to 2 parts by weight, preferably 0.05 to 1.5 parts by weight and more preferably 0.1 to 1.0 part by weight on the basis of 100 parts by weight of the aromatic polycarbonate resin. When the amount of the ultraviolet absorber blended is less than 0.01 part by weight, the effect of addition thereof tends to be insufficient. When the amount of the ultraviolet absorber blended is more than 2 parts by weight, the resultant molded product tends to be deteriorated in color tone owing to strong yellowness thereof, or there is such a strong tendency that the molded product suffers from bleed-out on the surface thereof.

The fluorescent brighteners used in the present invention are not particularly limited as long as they are compounds capable of absorbing ultraviolet light having a wavelength of less than 400 nm, converting an energy of the ultraviolet light into a visible light having a wavelength of not less than 400 nm, in particular, bluish violet light, and then radiating the thus converted light therefrom. Examples of the preferred fluorescent brighteners may include cumarin-based compounds and benzoxazole-based compounds.

Specific examples of the cumarin-based compounds may include 3-phenyl-7-aminocumarin, 3-phenyl-7-(imino-1',3',5'-triazine-2'-diethylamino-4'-chloro)-cumarin , 3-phenyl-7-(imino-1',3',5'-triazine-2'-diethylamino-4'-methoxy)-cumarin, 3-phenyl-7-(2H-naphtho(1,2-d)-triazole-2-yl)-cumarin and 4-methyl-7-hydroxy-cumarin.

Specific examples of the benzoxazole-based compounds may include 2,5-thiophenediyl(5-tert-butyl-1,3-benzoxazole), 4,4'-bis(benzoxazole-2-yl)stilbene, 4-(benzoxazole-2-yl)-4'-(5-methylbenzoxazole-2-yl)stilbene and 4,4'-bis (benzoxazole-2-yl)furan.

In addition, as the fluorescent brightener, there may also be used commercially available products such as "HAKKOL PSR" (tradename) produced by Hakole Sangyo Co., Ltd., and "UVITEX OB" and "UVITEX OB-ONE" (tradenames) both produced by Ciba Specialty Chemicals Corp.

The amount of the fluorescent brightener blended in the resin composition is usually 0.001 to 0.2 part by weight, preferably 0.003 to 0.15 part by weight and more preferably 0.005 to 0.10 part by weight on the basis of 100 parts by weight of the aromatic polycarbonate resin. When the amount of the fluorescent brightener blended is less than 0.001 part by weight, the resultant molded product tends to fail to sufficiently exhibit a function of increasing a lightness by eliminating yellowness thereof or a function of absorbing ultraviolet light and radiating the absorbed energy to bluish violet color of visible region. When the amount of the fluorescent brightener blended is more than 0.2 part by weight, the effect corresponding to such a large amount added tends to be often unrecognized.

Examples of the dyes or pigments may include inorganic pigments, organic pigments and organic dyes. The amount of the dyes or pigments blended in the resin composition is usually not more than 1 part by weight, preferably not more than 0.3 part by weight and more preferably not more than 0.1 part by weight on the basis of 100 parts by weight of the aromatic polycarbonate resin.

The aromatic polycarbonate resin composition used in the present invention may also contain other resins unless the addition thereof adversely affects the aimed effects of the present invention. Examples of the other resins may include polyamide resins; polyimide resins; polyether imide resins; polyurethane resins; polyphenylene ether resins; polyphenylene sulfide resins; polysulfone resins; polyolefin resins such as polyethylene and polypropylene; styrene-based resins such as polystyrene and acrylonitrile-styrene copolymers; polymethacrylate resins; phenol resins; and epoxy resins. The amount of the other resins blended in the resin composition is usually not more than 40 parts by

weight and preferably not more than 30 parts by weight on the basis of 100 parts by weight of the aromatic polycarbonate resin.

The process for producing the aromatic polycarbonate resin composition used in the present invention is not particularly limited, and there may be used, for example, the method of blending the respective components at the same time or separately in divided parts and melt-kneading the obtained mixture, at any optional stage or stages prior to the stage where the final molded product is produced. The blending may be conducted by various suitable methods well known in the art, for example, the method using a tumbler or a Henschel mixer, the method of quantitatively feeding the raw components into a hopper of an extruder through a feeder and mixing the respective components therein, etc. Alternatively, the components other than the polycarbonate resin may also be fed to a mid portion of the extruder upon melt-kneading without being previously mixed.

The light guide plate of the present invention is produced by molding the above aromatic polycarbonate resin composition. Examples of the molding method may include an injection molding method, a compression molding method and an injection compression molding method. Among these methods, preferred is the injection molding method.

The light guide plate of the present invention may be of any suitable shape such as a wedge shape and a flat plate shape. In any case, the light guide plate is preferably provided with irregular patterns (for example, prism-shaped patterns or cylindrical patterns) on at least one slant surface or flat surface thereof. Such irregular patterns may be formed by transferring irregular portions formed on a part of the surface of a mold onto the slant or flat surface of the light guide plate upon injection molding. The irregular portions are preferably formed on an insert as a part of the mold in view of simplicity.

In the case of producing a thin light guide plate by an injection molding method, there may be employed the method using a general mold made of a steel material, the method using an insulated runner mold which is partially made of a low-heat conductive material (e.g., ceramic materials, resins such as polyimides, or resin compositions), the method of selectively subjecting the surface of the mold and its surrounding portions to rapid heating and rapid cooling, etc. In the present invention, there is preferably used an insulated runner mold made of zirconia ceramic. In the method using such an insulated runner mold, since formation of a solid layer owing to rapid cooling of the molten thermoplastic resin in a mold cavity is avoided, the mold cavity can be more readily filled with the molten thermoplastic resin, even when the thickness of the resin filled in the mold cavity is very small, as compared to the method using a general mold made of a steel material and further the other methods described above. As a result, the method using such an insulated runner mold is more suitable for producing the light guide plate exhibiting an excellent transfer property for fine irregular patterns.

Also, when producing the light guide plate of the present invention by an injection molding method, the resin injection rate upon injecting the molten resins into the mold cavity is preferably in the range of 300 to 2000 mm/sec as measured at a resin temperature of 280 to 390°C. The resin injection rate is 2 to 13 times that used in an ordinary injection molding methods. Thus, when the molten resins are injected into the mold cavity at a high resin injection rate as compared to those of the conventional techniques, it is possible to surely and completely fill the mold cavity having a very small thickness with the molten resins. The above resin temperature is preferably 280 to 360°C, and the above resin injection rate is more preferably 800 to 1800 mm/sec.

Meanwhile, in the present invention, even under such a high-temperature molding condition using a resin temperature as high as from 320 to 390°C, the resultant light guide plate is free from problems such as yellow discoloration and burning as well as deterioration in strength and luminance owing to thermal decomposition of the resins upon molding, thereby enabling production of a thin light guide plate having a desired small thickness by molding the resin composition. Further, the aromatic polycarbonate resin composition is very excellent in fluidity as compared to conventional resin compositions for light guide plates and, therefore, also suitable for production of a larger-size light guide plate having a thickness of not less than 0.45 mm.

In the present invention, when using the above aromatic polycarbonate resin composition, if required, in combination with the specific mold and molding conditions, it becomes possible to obtain a light guide plate having a very small thickness which has never been achieved conventionally, more specifically, such a light guide plate which has a thickness of not more than 0.44 mm in a region occupying at least 80% of the light guide plate. The lower limit of the thickness of the light guide plate according to the present invention is 0.10 mm from the viewpoints of moldability, appearance of the obtained molded product, strength, luminance, etc.

When the light guide plate of the present invention is applied to liquid crystal displays, the light guide plate may be incorporated in a surface light source device in which a light source is disposed in the manner of an edge type or a direct backlight type. As the light source, there may be used not only a fluorescent lamp but also self-illuminants such as cold cathode tube, LED, laser diode and organic EL. For example, in the case of the surface light source device of an edge type, the light source is positioned as follows. That is, in the light guide plate of a wedge shape, the light source is disposed at a thick end portion of the light guide plate, whereas in the light guide plate of a flat plate shape, the light source is disposed at an end portion thereof. Such light guide plates may be applied to display parts of cellular phones, portable terminal equipments, cameras, watches, note-type personal computers, displays, illumination equipments,

signals, lamps for automobiles, domestic appliances, optical equipments, etc.

When the surface light source device of an edge type is applied to liquid crystal displays, the device may be of either a back-light type or a front-light type. As examples of these types, a conceptual view of the surface light source device of a black-light type is shown in Fig. 1, and a conceptual view of the surface light source device of a black-light type is shown in Fig. 2.

In the surface light source device of a back-light type shown in Fig. 1, a reflecting member (4) is disposed in an opposed relation to a first surface (11) of the light guide plate (1). Also, a liquid crystal display device (panel) (3) is disposed in an opposed relation to a second surface (12) of the light guide plate (1). Light emitted from a light source (2) is incident on an end portion of the light guide plate (1), and then impinges against irregular portions formed on the first surface (11) and is scattered. The scattered light is emitted from the first surface (11), reflected on the reflecting member (4) and then is incident again on the first surface (11). The incident light is emitted from the second surface (12) and irradiated on the liquid crystal display device (3). Between the liquid crystal display device (3) and the second surface (12), there may be disposed, for example, a diffusion sheet (5) or a prism sheet (not shown). Meanwhile, when the light guide plate is provided with no irregular portions, a plurality of prism sheets are used to impart a suitable directivity to the light.

In the surface light source device of a front-light type shown in Fig. 2, Light emitted from a light source (2) is incident on an end portion of the light guide plate (1), and then impinges against irregular portions formed on a first surface (11) and is scattered. The scattered light is emitted from a second surface (12), and passed through a phase difference film (or polarizing film) (6) and then the liquid crystal display device (3). The light emitted from the liquid crystal display device (3) is reflected on a reflecting member (4) disposed outside of the liquid crystal display device (3), passed again through the liquid crystal display device (3) and then through the phase difference film (or polarizing film) (6), further passed through the light guide plate (1), and finally emitted from the first surface (11). The thus emitted light is recognized as images displayed on the liquid crystal display device (3). Usually, a reflection-preventing layer (not shown) is formed on the second surface (12).

## EXAMPLES

The present invention is described in more detail below by the following Examples. However, these Examples are only illustrative and not intended to limit a scope of the present invention. The raw materials and evaluation methods used in the following Production Examples, Examples and Comparative Examples are as follows.

(a)_ Aromatic polycarbonate resin:

The aromatic polycarbonate resins produced in the below-mentioned Production Examples were used.

(b) Stabilizer-1:

"ADEKASTAB PEP-36" (tradename) produced by Asahi Denka Kogyo co., Ltd.; bis(2,6-di-tert-butyl-4-methylphenyl)pentaerythritol diphosphite

(c) Stabilizer-2:

"ADEKASTAB 2112" (tradename) produced by Asahi Denka Kogyo Co., Ltd.; tris(2,4-di-tert-butylphenyl)phosphite

(d) Releasing agent -1:

"SH556" (tradename) produced by Toray Dow Corning Silicone Co., Ltd.; polymethylphenyl siloxane (branched type; kinematic viscosity: 20 cSt)

(e) Releasing agent-2:

"RIKEMALE S-100A" (tradename) produced by Riken Vitamin Co., Ltd.; glycerol monostearate

(1) Viscosity-average molecular weight:

Using an Ubbelohde viscometer, the intrinsic viscosity [η] was measured at 20°C in methylene chloride, and the viscosity-average molecular weight was calculated according to the following formula:

$$[\eta] = 1.23 \times 10^{-4} \times (Mv)^{0.83}$$

(2) Molecular weight distribution (Mw/Mn):

First, the average molecular weight was measured by gel permeation chromatography (GPC) using a polystyrene (PS) as a standard polymer. The measuring conditions are shown in Table 1 below.

Table 1

| | |
|---|---|
| Apparatus | "Alliance" manufactured by Waters Corp. |
| Column | "Shodex K-805L" (x 2) manufactured by Showa Denko Co., Ltd. |
| Detector | UV detector: 254 nm |
| Eluent | Chloroform |

Next, after conducting the GPC measurement, the relation between an elution time and a molecular weight of polycarbonate (PC) was determined by a Universal Calibration method to prepare a calibration curve thereof. The elution curve (chromatogram) of PC was prepared under the same measuring conditions as used for preparing the calibration curve, and the respective average molecular weights were determined from the elution time (molecular weight) and peak area (number of molecules) of the elution time.

When the molecular weight is expressed by Mi and the number of molecules is expressed by Ni, the number-average molecular weight and weight-average molecular weight are respectively represented by the following formulae.

(Number-average molecular weight)

$$Mn = \Sigma(NiMi)/\Sigma Ni$$

(Weight-average molecular weight)

$$Mw = \Sigma(NiMi^2)/\Sigma(NiMi)$$

Also, the following calculation formulae are used as the conversion formulae. In the calculation formulae, MPC represents a molecular weight of PC, and MPS represents a molecular weight of PS. These formulae are determined from the following Mark-Houwink formula showing the relation between the intrinsic viscosity [η] and the molecular weight M. In the Mark-Houwink formula, as the values of K and α, K = 1.11 x $10^{-4}$ and α = 0.725 are used in the case of PS, and K = 3.89 x $10^{-4}$ and a = 0.700 are used in the case of PC.

(Conversion formulae)

$$MPC = 0.47822MPS^{1.01470}$$

$$MPS = 2.0689MPC^{0.98551}$$

$$[\eta] = KM^{\alpha}$$

Then, the elution curve (chromatogram) of polycarbonate was prepared under the same measuring conditions as used for preparing the calibration curve, and the respective average molecular weights were determined from the elution time (molecular weight) and peak area (proportional to number of molecules) of the elution time.

(3) Method of measuring content of low-molecular weight polymer (having a molecular weight of less than 1,000):

The content of the low-molecular weight polymer was measured by the above GPC method. The ratio of a peak area of the low-molecular weight polymer having a molecular weight of less than 1,000 in terms of PC to a peak area of a whole PC sample was determined as the content of the low-molecular weight polymer.

(4) Moldability:

Using a mold provided on a stationary side surface thereof with an insert formed with prisms and made of a steel material having a short side length of 42 mm and a long side length of 58 mm, and an insert made of a heat-insulating material having a short side length of 57 mm and a long side length of 84 mm, a flat plate-shaped light guide plate having a thickness of 0.3 mm was produced. The prisms were shaped by using a mold having a pitch of 200 μm and a depth of 8 μm. As the materials of the mold inserts, "STAVAX" was used as the steel material, whereas zirconia ceramic formed thereon with a 100 μm-thick Ni-P layer was used as the heat-insulating material. Using an injection molding machine "TR100EH" manufactured by Sodic Plastic Co., Ltd., the resin composition was molded at a mold temperature of 120°C and a cylinder temperature of 360°C.

Upon conducting the molding procedure under the above molding conditions, a filling property, mold deposits and appearance and strength of the resultant light guide plate were evaluated according to the ratings shown in Table 2 below.

Table

Table 2

| | Filling property | Mold deposits (*1) | Appearance of molded product | strength of molded products (*2) |
|---|---|---|---|---|
| ○ | Well filled | Less amount of deposits | No burning occurred | No cracks occurred |
| × | Poorly filled | Large amount of deposits | Burning occurred | Cracks occurred |
| Note *1: The surface of the mold after molding 1,000 shots was observed by naked eyes.<br>*2: Occurrence or non-occurrence of cracks on molded products as well as sprues and runners during the continuous molding process. | | | | |

(5) Average thickness:

The average thickness of the obtained light guide plate was determined as an average value of total 9 thickness values measured at cross positions of 3 levels in width and 3 levels in length using a micrometer.

(6) Average luminance and uniformity ratio of luminance:

The light guide plate was disposed within a dark room such that the irregular pattern-formed surface of the light guide plate faced downwardly. Four LEDs were disposed on an end face of one short side of the light guide plate in an equidistantly spaced relation to each other to form a surface light source device of an edge type. A luminance meter "TOPCON BM-7" manufactured by Topcon Co., Ltd., was disposed 30 cm above the surface of the light guide plate where no irregular patterns were formed to measure a luminance of the light guide plate. The average luminance was determined as an average value of total 9 luminance values measured at cross positions of 3 levels in width and 3 levels in length. In addition, the uniformity ratio of luminance was calculated according to the following formula:

$$\text{Uniformity ratio of luminance (\%)} = (\text{minimum value of luminance}/\text{maximum value of luminance}) \times 100.$$

Meanwhile, upon the measurement of luminance, the light guide plate having such a shape as shown in Fig. 3 was used, and the light source was disposed on the side where the thickness of the light guide plate was 0.5 mm.

Production Example 1: (Production of aromatic polycarbonate resin)

8.00 kg (35 mol) of 2,2-bis(4-hydroxyphenyl)propane (BPA) and 50 g of hydrosulfite were added to 34 L of a 8% (w/w) sodium hydroxide aqueous solution, and dissolved therein. The resultant solution was mixed with 11 L of dichloromethane. While maintaining the obtained solution at 20°C under stirring at a reverse rotating speed of 180 rpm using an agitator manufactured by Shimadzu Seisakusho Co., Ltd., 4.0 kg of phosgene was blown into the solution over 30 min.

After completion of blowing the phosgene, 6L of a 8% (w/w) sodium hydroxide aqueous solution, 14 L of dichloromethane and 404 g (2.7 mol) of p-tert-butyl phenol were added to the obtained reaction solution, and the resultant mixture was violently stirred at a reverse rotating speed of 210 rpm to allow the mixture to be emulsified. Thereafter, the obtained emulsion was mixed with 10 mL of triethyl amine as a polymerization catalyst and polymerized for about 1 hr.

The thus obtained polymerization reaction solution was separated into a water phase and an organic phase. The thus separated organic phase was neutralized with phosphoric acid, and repeatedly washed with pure water until the pH value of the wash solution became neutral. The thus purified aromatic polycarbonate resin solution was subjected to distillation to remove the organic solvent therefrom, thereby obtaining an aromatic polycarbonate resin in the form of a powder. As a result of subjecting the obtained aromatic polycarbonate resin powder to measurement of viscosity and GPC analysis, it was confirmed that the aromatic polycarbonate resin (hereinafter referred to merely as "PC-1") had a viscosity-average molecular weight (Mv) of 14,000 and a ratio Mw/Mn of 2.4, and the content of low-molecular weight polymer having a molecular weight of less than 1,000 in the resin was 1.8%.

Production Example 2: (Production of aromatic polycarbonate resin)

Using a continuous production apparatus constructed of four vertical stirring reactors and one horizontal stirring reactor which were controlled under the following conditions, the aromatic polycarbonate resin was produced by a melting method.

(First vertical stirring reactor): 140°C; normal pressures
(Second vertical stirring reactor): 220°C; 13.3 kPa
(Third vertical stirring reactor): 240°C; 2 kPa
(Fourth vertical stirring reactor): 255°C; 93 Pa
(Fifth horizontal stirring reactor): 255°C; 93 Pa

First, in the raw material preparation step, bisphenol A (BPA) and diphenyl carbonate (DPC) were mixed with each other in a nitrogen gas atmosphere at a predetermined molar ratio (DPC/BPA = 1.15), and the resultant mixture was heated to 140°C, thereby preparing a mixed raw material melting solution.

Successively, the thus prepared mixed raw material melting solution was continuously fed to the first vertical stirring reactor through a raw material feed pipe heated to 140°C. While controlling an opening degree of the valve disposed on a polymer discharge line connected to a bottom of the reactor such that an average residence time of the raw solution was 60 min, the liquid level in the reactor was kept constant. Further, simultaneously with initiation of feeding the mixed raw material melting solution, a cesium carbonate aqueous solution as a catalyst was continuously fed at a rate of 0.35 μmol per 1 mol of bisphenol A to the first vertical stirring reactor through a catalyst introduction pipe.

Successively, the polymerization reaction solution discharged from the bottom of the first vertical stirring reactor was continuously fed to the second vertical stirring reactor, the third vertical stirring reactor, the fourth vertical stirring reactor and the fifth horizontal stirring reactor in a sequential manner.

During the polymerization reaction, the liquid level in the respective reactors was controlled such that an average residence time of the solution therein was 60 min, and phenol by-produced simultaneously with the polymerization reaction was distilled off therefrom. The production rate of the aromatic polycarbonate resin was 50 kg/hr. As a result, it was confirmed that the obtained aromatic polycarbonate resin (hereinafter referred to merely as "PC-2") had a viscosity-average molecular weight (Mv) of 14,000 and a ratio Mw/Mn of 2.3, and the content of low-molecular weight polymer having a molecular weight of less than 1,000 in the resin was 1.8%.

Production Example 3: (Production of aromatic polycarbonate resin)

The same procedure as defined in Production Example 1 was conducted except that 404 g (2.7 mol) of p-tert-butyl phenol was added simultaneously with addition of 11 L of dichloroethane, but no p-tert-butyl phenol was added after completion of blowing the phosgene, thereby producing an aromatic polycarbonate resin. As a result of subjecting the obtained aromatic polycarbonate resin to measurement of viscosity and GPC analysis, it was confirmed that the

aromatic polycarbonate resin (hereinafter referred to merely as "PC-3") had a viscosity-average molecular weight (Mv) of 14,000 and a ratio Mw/Mn of 2.9, and the content of low-molecular weight polymer having a molecular weight of less than 1,000 in the resin was 2.6%.

Production Example 4: (Production of aromatic polycarbonate resin)

The same procedure as defined in Production Example 1 was conducted except that the amount of p-tert-butyl phenol added was changed to 449 g (3.0 mol), thereby producing an aromatic polycarbonate resin. As a result of subjecting the obtained aromatic polycarbonate resin to measurement of viscosity and GPC analysis, it was confirmed that the aromatic polycarbonate resin (hereinafter referred to merely as "PC-4") had a viscosity-average molecular weight (Mv) of 12,000 and a ratio Mw/Mn of 2.4, and the content of low-molecular weight polymer having a molecular weight of less than 1,000 in the resin was 1.9%.

Production Example 5: (Production of aromatic Polycarbonate resin)

The same procedure as defined in Production Example 1 was conducted except that the amount of p-tert-butyl phenol added was changed to 329 g (2.2 mol), thereby producing an aromatic polycarbonate resin. As a result of subjecting the obtained aromatic polycarbonate resin to measurement of viscosity and GPC analysis, it was confirmed that the aromatic polycarbonate resin (hereinafter referred to merely as "PC-5") had a viscosity-average molecular weight (Mv) of 16,500 and a ratio Mw/Mn of 2.2, and the content of low-molecular weight polymer having a molecular weight of less than 1,000 in the resin was 1.4%.

Production Example 6: (Production of aromatic polycarbonate resin)

The same procedure as defined in Production Example 1 was conducted except that 202 g (1-35 mol) of p-tert-butyl phenol was added simultaneously with addition of 11 L of dichloroethane, and further 202 g (1.35 mol) of p-tert-butyl phenol was added after completion of blowing the phosgene, thereby producing an aromatic polycarbonate resin. As a result of subjecting the obtained aromatic polycarbonate resin to measurement of viscosity and GPC analysis, it was confirmed that the aromatic polycarbonate resin (hereinafter referred to merely as "PC-6") had a viscosity-average molecular weight (Mv) of 14,000 and a ratio Mw/Mn of 2.6, and the content of low-molecular weight polymer having a molecular weight of less than 1,000 in the resin was 2.2%.

Production Example 7:

88 parts by weight of an aromatic polycarbonate resin "IUPILON H-4000" produced by Mitsubishi Engineering-Plastics Corporation, and 12 parts by weight of an aromatic polycarbonate oligomer "AL-071" produced by the same company, were sufficiently mixed with each other, thereby obtaining an aromatic polycarbonate resin powder. As a result of subjecting the obtained aromatic polycarbonate resin powder to measurement of viscosity and GPC analysis, it was confirmed that the aromatic polycarbonate resin (hereinafter referred to merely as "PC-7") had a viscosity-average molecular weight (Mv) of 14,000 and a ratio Mw/Mn of 3.1, and the content of low-molecular weight polymer having a molecular weight of less than 1,000 in the resin was 3.0%.

Examples 1 to 5 and Comparative Examples 1 to 5:

After blending the respective raw materials with each other at the mixing ratios as shown in Tables 3 and 4, the obtained mixture was melted and kneaded using a vented single-screw extruder "VS-40" (manufactured by Tanabe Plastics Kikai Co., Ltd.) having a screw diameter of 40 mm at a cylinder temperature of 240°C, and extruded into stands therefrom. The thus extruded strands were cut into pellets. The resultant pellets were dried at 120°C for 5 to 7 hr using a hot air circulating-type dryer and then molded under the same conditions as used above at an injection rate as shown in Tables 3 and 4, thereby obtaining a light guide plate as a molded product for evaluation. The results of evaluation of the molded product are shown in Tables 3 and 4.

Table 3

| Items (unit) | Examples | | | | |
|---|---|---|---|---|---|
| | 1 | 2 | 3 | 4 | 5 |
| Composition (wt part) | | | | | |
| PC-1 | 100 | - | 100 | - | - |
| PC-2 | - | 100 | - | 100 | - |
| PC-3 | - | - | - | - | - |
| PC-4 | - | - | - | - | - |
| PC-5 | - | - | - | - | - |
| PC-6 | - | - | - | - | 100 |
| PC-7 | - | - | - | - | - |
| Stabilizer-1 | 0.05 | - | 0.05 | - | 0.05 |
| Stabilizer-2 | - | 0.1 | - | 0.1 | - |
| Releasing agent-1 | 0.05 | 0.05 | 0.05 | 0.05 | - |
| Releasing agent-2 | - | - | - | - | 0.05 |
| Molded product | | | | | |
| Size of light guide plate (inch) (long side/short side(mm)) | 2.8 (58/42) | 2.8 (58/42) | 4 (84/57) | 4 (84/57) | 2.8 (58/42) |
| Mold | | | | | |
| Insert of mold (-) | Steel | Steel | IM-1 | IM-1 | Steel |
| Molding conditions | | | | | |
| Cylinder temperature (°C) | 360 | 360 | 360 | 360 | 360 |
| Injection rate (mm/sec) | 1500 | 1500 | 1800 | 1800 | 1500 |
| Moldability | | | | | |
| Filling property (-) | ○ | ○ | ○ | ○ | ○ |
| Mold deposits (-) | ○ | ○ | ○ | ○ | Δ |
| Properties of molded product | | | | | |
| Appearance (burning) (-) | ○ | ○ | ○ | ○ | Δ |
| Strength (-) | ○ | ○ | ○ | ○ | ○ |
| Average thickness (mm) | 0.3 | 0.3 | 0.3 | 0.3 | 0.3 |
| Average luminance ($cd/m^2$) | 4500 | 4450 | 4400 | 4420 | 4420 |
| Uniformity ratio of luminance (%) | 83 | 80 | 86 | 84 | 79 |
| Note *1: Heat-insulating material | | | | | |

Table 4

| Items (unit) | Comparative Examples | | | | |
|---|---|---|---|---|---|
| | 1 | 2 | 3 | 4 | 5 |
| Composition (wt part) | | | | | |
| PC-1 | - | - | - | - | - |

(continued)

| Items (unit) | Comparative Examples | | | | |
|---|---|---|---|---|---|
| | 1 | 2 | 3 | 4 | 5 |
| Composition (wt part) | | | | | |
| PC-2 | - | - | - | - | - |
| PC-3 | 100 | 100 | - | - | - |
| PC-4 | - | - | 100 | - | - |
| PC-5 | - | - | - | 100 | - |
| PC-6 | - | - | - | - | - |
| PC-7 | - | - | - | - | 100 |
| Stabilizer-1 | 0.05 | 0.05 | 0.05 | 0.05 | 0.05 |
| Stabilizer-2 | - | - | - | - | - |
| Releasing agent-1 | 0.05 | 0.05 | 0.05 | 0.05 | 0.05 |
| Releasing agent-2 | - | - | - | - | - |
| Molded product | | | | | |
| Size of light guide plate (inch) (long side/short side(mm)) | 2.8 (58/42) | 4 (84/57) | 2.8 (58/42) | 4 (84/57) | 2.8 (58/42) |
| Mold | | | | | |
| Insert of mold (-) | Steel | IM*1 | Steel | IM*1 | Steel |
| Molding conditions | | | | | |
| Cylinder temperature (°C) | 360 | 360 | 360 | 360 | 360 |
| Injection rate (mm/sec) | 1500 | 1800 | 1500 | 1800 | 1500 |
| Moldabilitv | | | | | |
| Filling property (-) | ○ | ○ | ○ | × | ○ |
| Mold deposits (-) | × | × | ○ | - | × |
| Properties of molded product | | | | | |
| Appearance (burning) (-) | × | × | ○ | - | × |
| Strength (-) | ○ | ○ | × | - | × |
| Average thickness (mm) | 0.3 | 0.3 | 0.3 | - | 0.3 |
| Average luminance (cd/m$^2$) | 3600 | 3510 | 4400 | - | 3380 |
| Uniformity ratio of luminance (%) | 70 | 67 | 86 | - | 75 |
| Note *1: Heat-insulating material | | | | | |

From the results shown in Tables 3 and 4, the followings were confirmed.

(1) Process for producing aromatic polycarbonate resin:

The aromatic polycarbonate resins produced by any of a phosgene method and a melting method were suitable as a raw material for the light guide plate of the present invention (Examples 1 to 5).

(2) Molecular weight distribution of aromatic polycarbonate resin:

Even though the viscosity-average molecular weight of the aromatic polycarbonate resins satisfied the requirement defined in the present invention, if the molecular weight distribution thereof was more than 2.7, there were caused

problems such as large amount of mold deposits as well as poor appearance and low luminance of the obtained molded products, although these resins were filled in the mold cavity (Comparative Examples 1 and 2).

(3) Viscosity-average molecular weight of aromatic polycarbonate resin:

Even though the molecular weight distribution of the aromatic polycarbonate resin satisfied the requirement defined in the present invention, if the viscosity-average molecular weight thereof was less than 13,000, the resultant molded product had a low strength and, therefore, suffered from occurrence of cracks (Comparative Example 3). When the viscosity-average molecular weight of the aromatic polycarbonate resin was more than 15,000, the melt-viscosity thereof became increased, so that the resin failed to be completely filled in the mold cavity even by using an insulated runner mold (Comparative Example 4). When using the aromatic polycarbonate resin whose viscosity-average molecular weight was controlled to fall within the range specified in the present invention, which was prepared by mixing the aromatic polycarbonate resin whose viscosity-average molecular weight was out of the specified range of the present invention with the aromatic polycarbonate oligomer, the molecular weight distribution as well as the low-molecular weight polymer content of the aromatic polycarbonate resin were both out of the ranges specified in the present invention, so that there were caused problems such as large amount of mold deposits and poor appearance of the obtained molded product (Comparative Example 5).

(4) Content of low-molecular weight aromatic polycarbonate polymer having a molecular weight of less than 1,000:

When comparing Examples 1 to 4 with Example 5, it was confirmed that when the low-molecular weight polymer was contained in an amount of more than 2% by weight, the amount of mold deposits was slightly increased, and the appearance of the molded products was deteriorated (owing to burning).

As described above, the aromatic polycarbonate resin composition used in the present invention is excellent in strength, transfer property, light transmittance, thermal stability and moldability and, therefore, capable of providing a thin light guide plate having such a small thickness that cannot be achieved conventionally, as well as a surface light source device using the light guide plate. Accordingly, the present invention has a remarkable industrial value.

## Claims

**1.** A light guide plate produced by molding an aromatic polycarbonate resin composition for light guide plates comprising:

an aromatic polycarbonate resin having a viscosity-average molecular weight of 13,000 to 15,000, and a ratio of the weight-average molecular weight to the number-average molecular weight (Mw/Mn) of 1.5 to 2.7 in terms of polystyrene as measured by gel permeation chromatography; and
a stabilizer and a releasing agent blended in the aromatic polycarbonate resin,
wherein the viscosity-average molecular weight is calculated according to the formula

$$[\eta] = 1.23 \times 10^{-4} \times (Mv)^{0.83}$$

and the intrinsic viscosity [η] is measured at 20 °C in methylene chloride using an Ubbelohde viscometer, and wherein the light guide plate has an average luminance of not less than 4,400 cd/$m^2$ when molded at an average thickness of 0.3 mm.

**2.** The light guide plate according to claim 1, wherein the aromatic polycarbonate resin contains a low-molecular weight aromatic polycarbonate polymer having a molecular weight of less than 1,000 in an amount of not more than 2% by weight.

**3.** The light guide plate according to claim 1 or 2, wherein the aromatic polycarbonate resin is produced by an interfacial method.

**4.** The light guide plate according to any one of claims 1 to 3, wherein the stabilizer is a phosphorous acid ester represented by the following general formula (I):

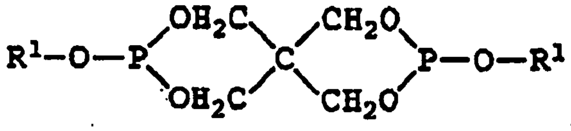

(I)

wherein $R^1$ is an aryl group or an alkyl group, and the two $R^1$ groups may be the same or different.

5. The light guide plate according to claim 1 or 2, wherein the aromatic polycarbonate resin is produced by a transesterification method, and the stabilizer is a phosphorous acid ester represented by the following general formula (II):

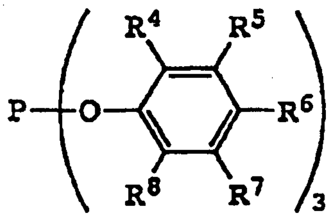

(II)

wherein $R^4$ to $R^8$ are respectively a hydrogen atom, an aryl group or an alkyl group having 1 to 20 carbon atoms, and may be the same or different.

6. The light guide plate according to any one of claims 1 to 5, wherein the aromatic polycarbonate resin composition is molded by an injection molding method.

7. The light guide plate according to claim 6, wherein the injection molding is conducted by using an insulated runner mold in which an insert made of zirconia ceramic is disposed.

8. The light guide plate according to claim 6 or 7, wherein the injection molding is conducted at a cylinder temperature of not lower than 280 °C and a resin injection rate of not less than 300 mm/sec.

9. The light guide plate according to any one of claims 1 to 8, which has a length of 40 to 90 mm in a longitudinal direction thereof, and a region occupying at least 80% of the light guide plate has a thickness of not more than 0.7 mm.

10. The light guide plate according to claim 9, wherein the region occupying at least 80% of the light guide plate has a thickness of not less than 0.10 mm and not more than 0.44 mm.

## Patentansprüche

1. Lichtleiterplatte, die durch Formen einer aromatischen Polycarbonatharz-Zusammensetzung für Lichtleiterplatten hergestellt wird, umfassend:

   ein aromatisches Polycarbonatharz mit einem viskositätsgemittelten Molekulargewicht von 13.000 bis 15.000 und einem Verhältnis von gewichtsgemitteltem Molekulargewicht zu zahlengemitteltem Molekulargewicht (Mw/Mn) von 1,5 bis 2,7 in bezug auf Polystyrol, wie durch Gelpermeationschromatografie gemessen; und einen Stabilisator und ein Freisetzungsmittel, die in das aromatische Polycarbonatharz eingemischt sind, wobei das viskositätsgemittelte Molekulargewicht gemäss der folgenden Formel berechnet wird:

$$[\eta] = 1{,}23 \times 10^{-4} \times (Mv)^{0{,}83}$$

   und die intrinsische Viskosität $[\eta]$ bei 20°C in Methylenchlorid unter Verwendung eines Ubbelohde-Viskosimeters gemessen wird, und
   wobei die Lichtleiterplatte eine mittlere Leuchtdichte von nicht weniger als 4.400 cd/m$^2$ aufweist, wenn sie mit einer mittleren Dicke von 0,3 mm geformt ist.

**2.** Lichtleiterplatte gemäss Anspruch 1, wobei das aromatische Polycarbonatharz ein niedermolekulares aromatisches Polycarbonatpolymer mit einem Molekulargewicht von weniger als 1.000 in einer Menge von nicht mehr als 2 Gew. % enthält.

**3.** Lichtleiterplatte gemäss Anspruch 1 oder 2, wobei das aromatische Polycarbonatharz durch ein Grenzflächenverfahren hergestellt wird.

**4.** Lichtleiterplatte gemäss irgendeinem der Ansprüche 1 bis 3, wobei der Stabilisator ein Phosphorigsäureester der folgenden allgemeinen Formel (I) ist:

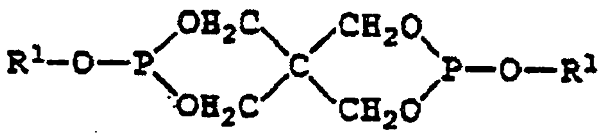

(I)

worin $R^1$ eine Arylgruppe oder eine Alkylgruppe ist und die beiden $R^1$-Gruppen gleich oder verschieden sein können.

**5.** Lichtleiterplatte gemäss Anspruch 1 oder 2, wobei das aromatische Polycarbonatharz durch ein Umesterungsverfahren hergestellt wird und der Stabilisator ein Phosphorigsäureester der folgenden allgemeinen Formel (II) ist:

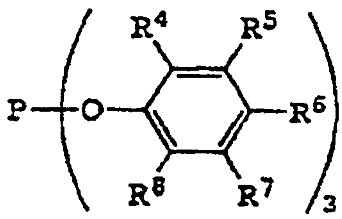

(II)

worin $R^4$ bis $R^8$ ein Wasserstoffatom, eine Arylgruppe oder eine Alkylgruppe mit 1 bis 20 Kohlenstoffatomen sind und gleich oder verschieden sein können.

**6.** Lichtleiterplatte gemäss irgendeinem der Ansprüche 1 bis 5, wobei die aromatische Polycarbonatharz-Zusammensetzung durch ein Spritzgussverfahren geformt wird.

**7.** Lichtleiterplatte gemäss Anspruch 6, wobei das Spritzgussformen unter Verwendung einer Isolierkanalform (insulated runner mold) durchgeführt wird, in die ein Einsatz aus Zirkoniumoxidkeramik eingebracht ist.

**8.** Lichtleiterplatte gemäss Anspruch 6 oder 7, wobei das Spritzgussformen bei einer Zylindertemperatur von nicht weniger als 280°C und einer Harzeinspritzgeschwindigkeit von nicht weniger als 300 mm/sek durchgeführt wird.

**9.** Lichtleiterplatte gemäss irgendeinem der Ansprüche 1 bis 8, die eine Länge von 40 bis 90 mm in Längsrichtung hat und eine Region, die mindestens 80 % der Lichtleiterplatte einnimmt, eine Dicke von nicht mehr als 0,7 mm aufweist.

**10.** Lichtleiterplatte gemäss Anspruch 9, wobei die Region, die mindestens 80 % der Lichtleiterplatte einnimmt, eine Dicke von nicht weniger als 0,10 mm und nicht mehr als 0,44 mm aufweist.

## Revendications

**1.** Plaque de guidage de lumière produite en moulant une composition de résine de polycarbonate aromatique pour plaques de guidage de lumière comprenant :

une résine de polycarbonate aromatique ayant une masse moléculaire moyenne en viscosité de 13 000 à 15 000 et un rapport de la masse moléculaire moyenne en poids sur la masse moléculaire moyenne en nombre (Mw/Mn) de 1,5 à 2,7 en termes de polystyrène tel que mesuré par chromatographie par perméation sur gel ; et

un stabilisateur et un agent de libération mélangés dans la résine de polycarbonate aromatique, dans laquelle la masse moléculaire moyenne en viscosité est calculée selon la formule

$$[\eta] = 1,23 \times 10^{-4} \times (Mv)^{0,83}$$

et la viscosité intrinsèque [η] est mesurée à 20 °C dans du chlorure de méthylène en utilisant un viscosimètre Ubbelohde, et

dans laquelle la plaque de guidage de lumière a une luminance moyenne non inférieure à 4 400 cd/m$^2$ quand elle est moulée à une épaisseur moyenne de 0,3 mm.

2. Plaque de guidage de lumière selon la revendication 1, dans laquelle la résine de polycarbonate aromatique contient un polymère de polycarbonate aromatique à faible masse moléculaire ayant une masse moléculaire inférieure à 1 000 en une quantité non supérieure à 2 % en poids.

3. Plaque de guidage de lumière selon la revendication 1 ou 2, dans laquelle la résine de polycarbonate aromatique est produite par un procédé interfacial.

4. Plaque de guidage de lumière selon l'une quelconque des revendications 1 à 3, dans laquelle le stabilisateur est un ester d'acide phosphoré représenté par la formule générale suivante (I) :

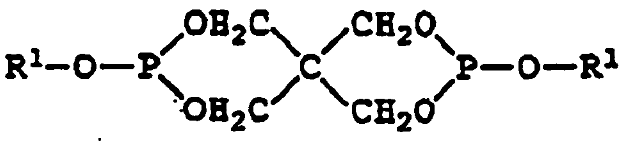 (I)

dans laquelle $R^1$ est un groupe aryle ou un groupe alkyle, et les deux groupes $R^1$ peuvent être les mêmes ou différents.

5. Plaque de guidage de lumière selon la revendication 1 ou 2, dans laquelle la résine de polycarbonate aromatique est produite par un procédé de transestérification et le stabilisateur est un ester d'acide phosphoré représenté par la formule générale suivante (II) :

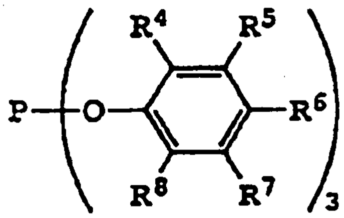 (II)

dans laquelle $R^4$ à $R^8$ sont respectivement un atome d'hydrogène, un groupe aryle ou un groupe alkyle ayant de 1 à 20 atomes de carbone, et peuvent être les mêmes ou différents.

6. Plaque de guidage de lumière selon l'une quelconque des revendications 1 à 5, dans laquelle la composition de résine de polycarbonate aromatique est moulée par un procédé de moulage par injection.

7. Plaque de guidage de lumière selon la revendication 6, dans laquelle le moulage par injection est effectué en utilisant un moule à canal de coulée isolé dans lequel un insert fait de zircone céramique est disposé.

8. Plaque de guidage de lumière selon la revendication 6 ou 7, dans laquelle le moulage par injection est effectué à une température de cylindre non inférieure à 280 °C et à une vitesse d'injection de résine non inférieure à 300 mm/s.

9. Plaque de guidage de lumière selon l'une quelconque des revendications 1 à 8, qui a une longueur de 40 à 90 mm dans sa direction longitudinale, et une région occupant au moins 80 % de la plaque de guidage de lumière a une épaisseur non supérieure à 0,7 mm.

**10.** Plaque de guidage de lumière selon la revendication 9, dans laquelle la région occupant au moins 80 % de la plaque de guidage de lumière a une épaisseur non inférieure à 0,10 mm et pas supérieure à 0,44 mm.

Fig. 1

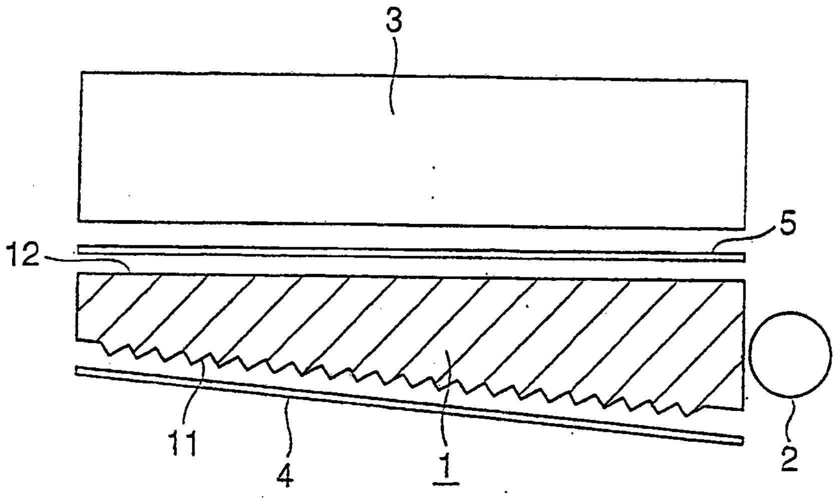


Fig. 2

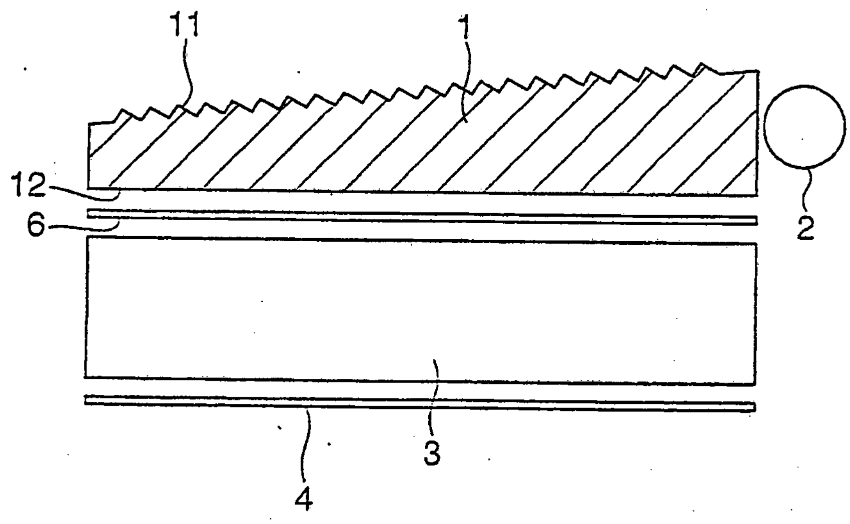


Fig. 3

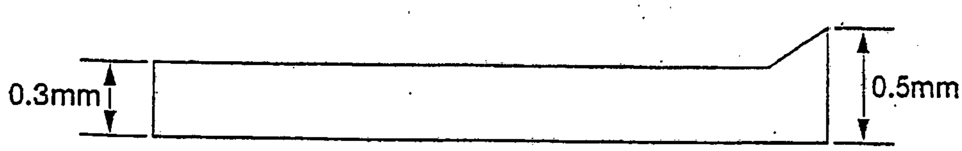

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001208917 A
- JP 2001208918 A
- JP 2001215336 A
- EP 1512723 A